# EUROPÄISCHE PATENTANMELDUNG

(11) **EP 0 669 527 A1**
(43) Veröffentlichungstag der Anmeldung: **30.08.1995**
(21) Anmeldenummer: 95100112.2
(22) Anmeldetag: 05.01.1995
(51) Int. Cl.: G01N 21/90

(54) **Verfahren zum Ausscheiden von Mehrwegflaschen aus dem Mehrweg-Umlauf**

(30) Priorität: 21.01.1994 CH 188/94
(71) Anmelder: ELPATRONIC AG, CH-6303 Zug (CH)
(72) Erfinder: Burri, Karl-Georg, CH-8942 Oberrieden (CH); Pavlik, Petr, Dr., CZ-18200 Prag (CZ)

(57) **Zusammenfassung**

Zur Ermittlung von Beschädigungen im Bodenbereich (3) einer Kunststoff-Flasche (1) wird ein Bild des Bodenbereichs mittels einer Kamera (2) aufgenommen. Das Bild wird dann in einem vorbestimmten Prüfbereich pixelweise auf eine Helligkeit geprüft. Grosse Abweichungen der Prüfkurve vom Durchschnittswert lassen auf eine beschädigte Flasche schliessen. Das Verfahren ist aussagekräftig und kann mit bereits vorhandenen Anlagen zur Flascheninspektion ausgeführt werden.

## Beschreibung

Die Erfindung betrifft ein Verfahren zum Prüfen von Mehrwegbehältern, insbesondere Kunststoff-Mehrwegflaschen, im Mehrweg-Umlauf, wobei im wesentlichen bei jedem Behälter-Rücklauf ein Bild eines Behälterbereichs, insbesondere des Behälterbodens, von einem Bildaufnahmegerät erfasst und maschinell analysiert wird.

Es ist bekannt, Mehrwegflaschen beim Rücklauf optisch auf das Vorhandensein von starken Verschmutzungen oder von Fremdkörpern zu prüfen, wobei die durch Analyse eines von einer Kamera aufgenommenen Bildes des Flascheninneren erfolgt. Abhängig vom Prüfergebnis werden die Flaschen aus dem Mehrweg-Umlauf ausgeschieden oder nicht.

Insbesondere bei Kunststoff-Mehrwegflaschen, z.B. bei PET-Flaschen, welche eine begrenzte Lebensdauer haben, stellt sich das Problem, dass diejenigen Flaschen, deren Lebensdauer sich infolge sogenannter "stress-cracks" dem Ende zu neigt, rechtzeitig aus dem Mehrweg-Umlauf entfernt werden sollten. Dies nicht nur aus optischen und hygienischen Gründen, sondern auch, um beim Konsumenten einen Bruch oder ein Reissen der Flaschen zu verhindern, sowie um in der Abfüllanlage beim jeweiligen erneuten Befüllen der Flasche, bei welchem die jeweilige Flasche mit relativ hohem Druck beaufschlagt wird, ein Reissen oder Platzen der Flasche zu vermeiden. Bisher ist es nicht gelungen, die üblichen Ermüdungsschäden solcher Flaschen, welche sich insbesondere in der Form von feinen, mehr oder weniger tiefen radialen und azimutalen Rissen im Bodenbereich der Flaschen darstellen, in einer solchen Weise zu erfassen, dass der jeweilige Beschädigungsgrad und insbesondere das Ende der Lebensdauer der Flasche erkannt werden kann. Die Risse entstehen während der Lebensdauer der Flasche durch deren Reinigung und deren Förderung und insbesondere durch die individuelle Behandlung durch den Benützer. Die Häufigkeit und die Tiefe der Risse nehmen dabei während des Flaschenlebens zu und die Lebensdauer der Flaschen wird im wesentlichen durch die Risse bestimmt.

Es stellt sich daher die Aufgabe, eine Möglichkeit zu schaffen, dass der Flaschenzustand erkannt werden kann und dass Flaschen insbesondere rechtzeitig vor deren Lebensdauer-Ende aus dem Mehrweg-Umlauf ausgeschieden werden können, ohne dass deshalb die einzelne Flasche wesentlich zu früh aus dem Mehrweg-Umlauf entnommen wird. Es stellt sich ferner die Aufgabe, dies im industriellen Umfeld rasch (moderne Flaschen-Inspektionsanlagen, erzielen einen Durchsatz von 40'000 bis 60'000 Flaschen pro Stunde) und kostengünstig auszuführen.

Diese Aufgaben werden beim Verfahren der eingangs genannten Art mit den Merkmalen des Anspruchs 1 gelöst.

Mit den genannten Merkmalen wird es möglich, ein Mass für die Risshäufigkeit und Risstiefe zu ermitteln. Die Flasche kann somit vor Erreichen kritischer Werte ausgeschieden werden. Durch die Lösung der Aufgabe durch Bildanalyse können grundsätzlich die bereits bestehenden Vorrichtungen zur Verschmutzungs- und Fremdkörperbestimmung herangezogen werden, die sich im industriellen Umfeld bewährt haben, was die Lösung sehr kostengünstig macht. Da in diesem Fall das ohnehin erfasste Bild verwendet wird, bedingt das Verfahren keinen zusätzlichen Prüfschritt an der Flasche selber, weshalb der Flaschendurchsatz in keiner Weise beeinträchtigt wird.

Im folgenden werden weitere Aspekte der Erfindung anhand der Zeichnungen näher erläutert. Dabei zeigt:
Figur 1 schematisch eine mögliche Anordnung von Kamera, Flasche und Beleuchtung zur Durchführung des Verfahrens;
Figur 2 schematisch das aufgenommene Bild des Flaschenbodens mit zur Erläuterung eingetragenen Prüffenstern und Radien; und
Figur 3 vereinfacht dargestellt die Helligkeitsverteilung entlang des Prüfbereichs.

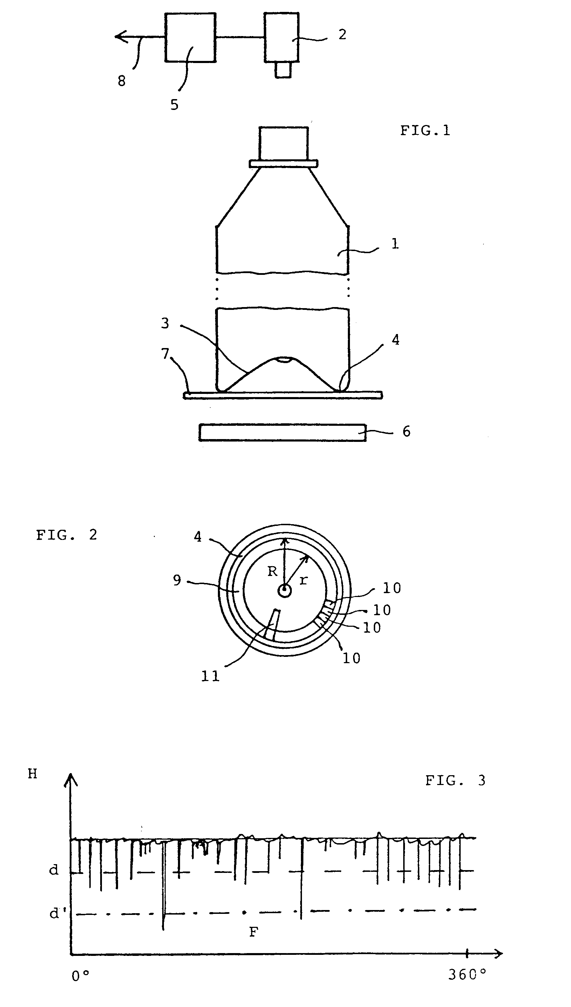

Figur 1 stellt schematisch eine Kunststoff-Flasche 1 dar, welche sich in einer nicht näher dargestellten Flaschen-Inspektionsanlage befindet. Solche Inspektionsanlagen sind bekannt und müssen hier nicht näher erläutert werden. Insbesondere weisen sie eine Fördereinrichtung auf zur in der Regel stehenden Förderung der Flaschen zu verschiedenen Prüfstationen. Figur 1 stellt dabei eine solche Prüfstation dar, bei der durch eine Kamera 2 ein Bild des Flaschenbodens aufgenommen wird. Dazu erfolgt im gezeigten Beispiel mittels einer Blitzbeleuchtungsanordnung 6, welche z.B. Blitzlampen oder gepulst betriebene LED-Arrays umfasst, eine homogene und vorzugsweise diffuse Beleuchtung des domförmigen Flaschenbodens 3. Auch Dauerbeleuchtung und die Verwendung einer Kamera mit Verschluss ist möglich. Im gezeigten Beispiel steht die Flasche 1 dabei mit ihrer kreisförmigen Aufstandsfläche auf einer transparenten Standfläche 7. Die Flasche kann aber auch anders gefördert bzw. gehalten werden, so dass die Standfläche 7 nicht benötigt wird. Die Videokamera 2 nimmt das durch die Beleuchtung hervorgerufene Bild auf. Das Bild wird an einen Rechner 5 abgegeben, welcher die Analyse des Bildes durchführt. Aufgrund des Ergebnisses der Analyse kann ein Steuersignal mittels einer Leitung 8 an eine Auswerf- oder Ausleiteinrichtung abgegeben werden, die die Flasche an einer von ihr später erreichten Stelle des Förderweges ausscheidet, wenn dies aufgrund des Analyseergebnisses als gegeben betrachtet wird. Wie erwähnt, wurden bisher auf solche Weise grobe Verschmutzungen oder Fremdkörper im Flascheninneren erkannnt.

Die vorliegende Erfindung setzt bei der Auswertung des gespeicherten Bildes ein, es kann sich dabei um ein Bild handeln, welches, wie geschildert, zum Zweck der Bodeninspektion oder zu einem anderen Zweck aufgenommen worden ist, und/oder um ein von beliebigem Ort aus aufgenommenes Bild handeln (wobei aber der Boden sichtbar ist).

Die Grundidee basiert darauf, dass der transparente, beleuchtete Flaschenboden Licht durchlässt, welches dann in den Sensor (Kamera) gelangt. Stress cracks stören den Lichtdurchtritt, was z.B. zu einer Verdunkelung im Bild am Ort des stress cracks führt. Ein Bild entsteht, wenn ein von der Lichtquelle ausgehender Lichtstrahl durch den Boden hindurchtritt und zum Sensor gelangt (oder umgekehrt, da es nur auf den geschlossenen Weg ankommt). Dieser Lichtpfad ist nicht gradlinig, sondern wegen der Brechung beim Uebertritt von einem Medium ins andere durch einen Zickzack-Kurs gekennzeichnet.

Das Bild wird nun in bevorzugter Ausführungsart wie folgt behandelt: Bestimmen des Zentrums und der Aufstandsfläche der Flasche (Ringfläche). Definieren eines Prüfbereiches, in der Regel eines Kreises, mit einem Radius der kleiner ist als derjenige der Aufstandsfläche. An sich genügt eine Breite des Kreises von einem Pixel; zum Ausfiltern von Störungen wird aber bevorzugt ein Kreisring von mehreren Pixel Breite abgearbeitet.

Bevorzugterweise weist der kreisringförmige Prüfbereich eine Breite von ca. 3 mm auf und schliesst sich in Richtung auf die Flaschenbodenmitte an die Aufstandsfläche an. Der Wert von ca. 3 mm wird besonders für 1,5 Liter-Flaschen bevorzugt. Es hat sich überraschenderweise gezeigt, dass dieser Bereich für die Ermittlung der stress-cracks optimal ist, obschon in diesem Bereich nicht die maximale Dichte der stress-cracks auftritt. Es ist aber ein Bereich, der sich in der Praxis als im wesentlichen störungsfrei präsentiert (ohne Wassertropfen und ohne die als "haze" bezeichnete Trübung) und in welchem die stress-cracks gut sichtbar sind. Für andere Flaschengrössen als 1,5 Liter-Flaschen kann dieser Wert von den angegebenen 3 mm abweichen, kann aber aufgrund der oben angegebenen Kriterien ermittelt werden. Der Prüfbereich kann natürlich auch in eine andere Zone verlegt werden, die Auswertung des Bildes wird dann aber aufwendiger und damit in der Regel langsamer.

Die Auswertung erfolgt, indem auf den Kreis ein Beobachtungsfenster gelegt, ausgewertet, danach verschoben und wieder ausgewertet wird. Die Auswertungsergebnisse sind als Kurve über den Kreisumfang darstellbar. Ausgewertet wird die Helligkeit bzw. die Helligkeitsänderung von Fensterposition zu Fensterposition.

Bevorzugterweise werden die Fenster so im Prüfbereich verschoben, dass sich aufeinanderfolgende Fenster jeweils überlappen. Die Fenster können dabei z.B. eine Breite (in radialer Richtung) von 3 Pixel und eine Länge (in Kreisumfangsrichtung) von 4 bis 10 Pixel aufweisen.

Figur 2 zeigt schematisch das Bild des Flaschenbodens mit der Aufstandsfläche 4. In Figur 2 ist der Prüfbereich direkt anschliessend an die Aufstandsfläche 4 gezeigt. Deren Innenradius ist mit R angegeben, der Innenradius des Prüfbereiches mit r, der Wert R-r beträgt also die bevorzugten 3 mm. Der Prüfbereich kann auch weiter zur Flaschenmitte hin verschoben sein, wobei sich dann ein Abstand zur Aufstandsfläche 4 ergeben kann. Der Prüfbereich kann auch aus mehreren Kreisringabschnitten bestehen, bevorzugt ist aber, dass ein ganzer Kreisring, also 360_{°}, als Prüfbereich bestimmt ist.

In Figur 2 sind zur Erläuterung mehrere Prüffenster 10 vergrössert grob schematisch dargestellt. Dabei ist die bevorzugte Ueberlappung der Fenster nicht dargestellt.

In jedem Fenster kann nun abhängig von den mit dem Bild erfassten stress cracks eine andere Helligkeit des Bildes feststellbar sein. Ein stress crack besitzt, gegenüber der unverletzten Oberfläche, eine andere Oberflächenneigung; entsprechend tritt das Licht mit anderer Richtung aus, was meistens dazu führt, das der Pfad Lichtquelle/Kamera des Lichtstrahls nicht mehr gegeben ist, sondern eben an einen anderen Ort als zur Kamera führt. Stress cracks erscheinen also als Kontraständerung. Ein anderer Effekt ist aber auch denkbar: Die Kamera befindet sich im Dunkelfeld; am Ort des stress cracks ist der Pfad Lichtquelle/Kamera geschlossen. Solche Effekte können auch nur für einzelne Frequenzen eines Frequenzgemisches von Licht auftreten.

Ist nun ein Beobachtungsfenster zum Beispiel wesentlich breiter als ein kleiner crack aber nur wenig breiter als ein grosser crack, ergibt ein kleiner crack nur eine geringere Abweichung von der normalen Helligkeit im Fenster; der Ausschlag der Kurve bleibt beim Durchschnittswert. Ein grosser crack kann dann, wenn das Fenster direkt über ihm liegt, dessen Zustand stark verändern, was einen starken Ausschlag auf der Kurve zur Folge hat.

Verschmutzungen erzeugen ebenfalls solche Ausschläge. Entsprechend wird nur dann auf erhebliches stress cracking geschlossen, wenn die starken Ausschläge gehäuft (über den Kreis von 3600) auftreten. Ebenso kann, wo der Verdacht auf einen erheblichen stress crack besteht, ein radiales Beobachtungsfenster geöffnet werden, wobei dann geprüft wird, ob die Störung eine stress crack ähnliche Geometrie besitzt oder nicht. Ein solches Fenster ist in Figur 2 schematisch als Fenster 11 angedeutet.

Weiter ist es sinnvoll die Signalkurve über 360 zu integrieren; ein Durchschnitt bei generell dunklen Werten (trotz kleinen Kurvenausschlägen) lässt auf eine generell gestörte Oberfläche (stress cracks, Hazing) schliessen, was dann ebenfalls zum Status "unzulässig" führt, obschon die einzelnen heftigen Ausschläge als Indikatoren für unerlaubt grosse stress cracks an sich fehlen.

Figur 3 zeigt in stark vergröberter Form die Signalkurve entsprechend der Helligkeit H entlang des 360 Prüfbereiches. Die gerade Linie soll dabei den Normalwert oder Durchschnittswert der Helligkeit des Bildes darstellen. Grosse Abweichungen der Kurve nach unten Richtung dunkler, welche z.B. einen Grenzwert d überschreiten, lassen, wie gesagt, auf grosse stress cracks schliessen. Treten diese Abweichungen nach unten in grösserer Zahl auf, so ist die Flasche als unzulässig auszuscheiden. Auch einzelne besonders grosse Abweichungen, welche z.B. einen zweiten Grenzwert d' überschreiten, können zu diesem Urteil führen. Daneben kann, wie geschildert, auch die Grösse der Fläche F unter der Kurve als Kriterium herangezogen werden.

Bei PET-Flaschen gibt es insbesondere zwei hauptsächliche Beschädigungstypen, nämlich solche Flaschen, welche wenige, zufällig voneinander beabstandete, grobe Risse aufweisen. Diese Flaschen erscheinen als gut durchsichtig, mit wenigen, in der Regel dunklen Stellen. Andererseits gibt es Flaschen, die eine Vielzahl von feinen Rissen aufweisen. Natürlich sind neben diesen Grundtypen auch Flaschen zu finden, welche mehr oder weniger beide Beschädigungen aufweisen. Es hat sich als besonders vorteilhaft zur Auswertung des Bildes erwiesen, wenn die Ueberschreitungen einzelner Grenzwerte, z.B. der beiden Grenzwerte d und d' von Figur 3 jeweils mit verschiedenem Gewicht gewertet und summiert werden. Es wird also bevorzugterweise festgestellt, wieviele Ueberschreitungen des Grenzwertes d vorkommen. Diese Zahl wird mit einem Gewichtsfaktor g1 multipliziert. Ferner wird festgestellt, wieviele Ueberschreitungen des Grenzwertes d' vorkommen. Diese Zahl wird mit dem Gewichtsfaktor g2 multipliziert. Die so gewichteten Zahlen werden addiert und die Summe wird mit einem wählbaren Ausscheidewert verglichen. Erreicht oder überschreitet die Summe den Ausscheidewert, so wird die Flasche ausgeschieden. Aus den ermittelten Summen kann auch eine Statistik über den Zustand der geprüften Flaschen erstellt werden.

Bei einer weiteren Ausführungsart kann anstelle von sichtbarem Licht eine Strahlungsart nicht sichtbarer Art verwendet werden, welche aber wie das Licht beim Durchtritt durch die Flaschenwand gebrochen wird. Beim entsprechenden Aufnahmegerät lässt sich dann ein crack auf dieselbe Art registrieren, wie dies bei der Verwendung von Licht der Fall ist. Dabei können je nach ihren Eigenschaften einzelne Frequenzen oder Frequenzgemische Verwendung finden. Eine andere Ausführungsform besitzt eine erfindungsgemässe Analyseanordnung zur Ausführung des erfindungsgemässen Verfahrens, wobei Defekte an irgendeinem beliebigen Ort der Flasche (z.B. im Halsbereich) erkannt werden können. Die zu untersuchenden Flaschenbereiche werden direkt oder, z.B. über Spiegel, indirekt vom Bildaufnahmegerät aufgenommen, wobei dann anstelle eines Kreisringes (beim Bodenbereich) ein anderer Ausschnitt durch die Auswerteeinheit untersucht wird.

## Patentansprüche

1. Verfahren zum Prüfen von Mehrwegbehältern, insbesondere Kunststoff-Mehrwegflaschen, im Mehrweg-Umlauf, wobei im wesentlichen bei jedem Behälter-Rücklauf ein Bild eines Behälterbereichs, insbesondere des Behälterbodens, von einem Bildaufnahmegerät erfasst und maschinell analysiert wird, dadurch gekennzeichnet, dass die Bildanalyse mindestens einen Auswertvorgang zur Risserkennung im Behälterbereich umfasst, wobei ein Prüfbereich bestimmt wird und der Prüfbereich in eine Mehrzahl von Prüffenster zerlegt wird, deren Helligkeit ermittelt wird, und dass die Abfolge der Helligkeitswerte ausgewertet wird, um aufgrund der Bildanalyse ein bestimmtes Stadium des Behälterzustandes zu erkennen und allenfalls als beschädigt erkannte Behälter aus dem Mehrweg-Umlauf auszuscheiden.

2. Verfahren nach Anspruch 1, dadurch gekennzeichnet, dass der Behälter ein Flaschenboden ist und dass der Prüfbereich zwischen der Flaschen-Aufstandsfläche und dem Zentrum des Flaschenbodens bestimmt wird.

3. Verfahren nach Anspruch 1 oder 2, dadurch gekennzeichnet, dass der Prüfbereich bandförmig bestimmt wird.

4. Verfahren nach einem der Ansprüche 1 bis 3, dadurch gekennzeichnet, dass als Prüfbereich mindestens ein Kreisringabschnitt bestimmt wird.

5. Verfahren nach Anspruch 4, dadurch gekennzeichnet, dass der Kreisringabschnitt eine Breite in radialer Richtung von ungefähr 3 Millimetern aufweist.

6. Verfahren nach einem der Ansprüche 1 bis 5, dadurch gekennzeichnet, dass das Prüffenster jeweils eine einigen Pixeln entsprechende Breite in radialer Richtung aufweist.

7. Verfahren nach einem der Ansprüche 1 bis 6, dadurch gekennzeichnet, dass aufeinanderfolgende Prüffenster sich jeweils überlappen.

8. Verfahren nach einem der Ansprüche 2 bis 7, dadurch gekennzeichnet, dass ein zusätzliches, sich radial weiter zum Zentrum erstrekkendes Prüffenster bestimmt wird.

9. Verfahren nach einem der Ansprüche 1 bis 8, dadurch gekennzeichnet, dass im wesentlichen für jedes Prüffenster dessen Abweichung von der durchschnittlichen Prüffensterhelligkeit ermittelt wird.

10. Verfahren nach Anspruch 9, dadurch gekennzeichnet, dass die Anzahl der Prüffenster ermittelt wird, deren Helligkeit um ein vorbestimmtes Mass unter der Durchschnittshelligkeit liegt.

11. Verfahren nach einem der Ansprüche 1 bis 10, dadurch gekennzeichnet, dass die Abweichungen der jeweiligen Prüffensterhelligkeit von der durchschnittlichen Helligkeit im wesentlichen über den gesamten Prüfbereich ermittelt wird und dass bei häufigem Auftreten einer Abweichung die Flasche aus dem Mehrweg-Umlauf ausgeschieden wird.

12. Verfahren nach einem der Ansprüche 1 bis 11, dadurch gekennzeichnet, dass das Mass des Abweichens der jeweiligen Prüffensterhelligkeit von der durchschnittlichen Prüffensterhelligkeit ermittelt wird.

13. Verfahren nach Anspruch 11, dadurch gekennzeichnet, dass das Mass nur dann ermittelt wird, wenn es einen vorbestimmten Grenzwert übersteigt.

14. Verfahren nach einem der Ansprüche 1 bis 13, dadurch gekennzeichnet, dass die sich aus den einzelnen Helligkeitswerten ergebende Signalkurve gebildet wird.

15. Verfahren nach Anspruch 13, dadurch gekennzeichnet, dass das Integral der Signalkurve gebildet wird.

16. Verfahren nach einem der Ansprüche 1 bis 15, dadurch gekennzeichnet, dass das Mass der Prüffensterhelligkeit jeweils mit mindestens zwei Grenzwerten verglichen wird, und dass die Anzahl der Grenzwertüberschreitungen je nach Grenzwert verschieden gewichtet wird, und dass die Summe der gewichteten Grenzwertüberschreitungen gebildet wird.

17. Vorrichtung zur Durchführung des Verfahrens nach einem der Ansprüche 1 bis 16, gekennzeichnet durch eine Behälterfördereinrichtung, mindestens eine entlang dieser angeordnete Bildaufnahmeanordnung und eine mit dieser verbundene, mindestens einen Rechner umfassende Bildauswerteeinheit, sowie mindestens eine auf ein von der Auswerteeinheit abgegebenes Signal ansprechende Ausleiteinrichtung, zum Ausscheiden von Behältern aus dem Förderweg.

18. Vorrichtung nach Anspruch 17, dadurch gekennzeichnet, dass die Bildaufnahmeanordnung eine Lichtquelle zur homogenen Beleuchtung des Behälterbodens umfasst.
